(19) Europäisches Patentamt
European Patent Office
Office européen des brevets

(11) **EP 3 386 186 B1**

(12) **FASCICULE DE BREVET EUROPEEN**

(45) Date de publication et mention
de la délivrance du brevet:
**06.03.2019 Bulletin 2019/10**

(51) Int Cl.:
*H04N 5/355* (2011.01)   *H04N 5/3745* (2011.01)
*H04N 5/347* (2011.01)   *H04N 5/363* (2011.01)

(21) Numéro de dépôt: **18163890.9**

(22) Date de dépôt: **26.03.2018**

(54) **CAPTEUR D'IMAGES**

BILDERFASSUNGSSENSOR

IMAGE SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.03.2017 FR 1752583**

(43) Date de publication de la demande:
**10.10.2018 Bulletin 2018/41**

(73) Titulaire: **Commissariat à l'Energie Atomique et
aux Energies
Alternatives
75015 Paris (FR)**

(72) Inventeur: **DUPONT, Bertrand
38360 SASSENAGE (FR)**

(74) Mandataire: **Cabinet Beaumont
4, Place Robert Schuman
B.P. 1529
38025 Grenoble Cedex 1 (FR)**

(56) Documents cités:
**US-A1- 2012 154 597      US-A1- 2013 141 620
US-A1- 2015 146 060**

## Description

Domaine

La présente demande concerne le domaine des circuits électroniques de façon générale, et vise plus particulièrement le domaine des capteurs d'images. Les modes de réalisation décrits sont particulièrement avantageux pour des applications d'imagerie infrarouge, mais peuvent s'appliquer plus généralement à tous types de capteurs d'images, notamment des capteurs d'images visibles.

Exposé de l'art antérieur

Un capteur d'images comprend classiquement une pluralité de pixels identiques ou similaires, par exemple agencés en matrice selon des lignes et des colonnes. Chaque pixel comporte un élément de conversion photoélectrique, par exemple une photodiode, adapté à générer un photocourant représentatif d'une intensité lumineuse reçue. Chaque pixel comporte en outre un élément capacitif de stockage adapté à intégrer le photocourant généré par l'élément de conversion photoélectrique. La mesure du niveau d'éclairement reçu par le pixel s'effectue en mesurant une variation de tension aux bornes de l'élément capacitif de stockage entre le début et la fin d'une période d'intégration.

Pour maximiser le rapport signal sur bruit, on cherche généralement à ce que le flux lumineux converti par l'élément de conversion photoélectrique du pixel pendant la période d'intégration soit le plus élevé possible, ou, dit autrement, à ce que la quantité de charges photogénérées accumulée dans l'élément capacitif de stockage du pixel pendant la période d'intégration soit la plus élevée possible. Ceci implique pour l'élément capacitif d'avoir une capacité de stockage de charges relativement importante, ce qui va à l'encontre des objectifs usuels de miniaturisation des pixels, et notamment de réduction du pas interpixels.

Résumé

Ainsi, un mode de réalisation prévoit un capteur d'images comportant une pluralité de pixels répartis en une pluralité de groupes élémentaires de plusieurs pixels chacun, dans lequel :

chaque pixel comporte un élément de conversion photoélectrique et un élément capacitif de stockage individuel ; et chaque groupe élémentaire de pixels comporte un élément capacitif de stockage partagé, le capteur comportant en outre un circuit de contrôle adapté à, lors d'une phase d'acquisition courante d'une image, mettre en oeuvre, dans chaque groupe élémentaire de pixels, les étapes suivantes :

a) pendant une première sous-période d'intégration, relier les éléments de conversion photoélectrique des pixels du groupe à l'élément capacitif de stockage partagé, de façon à intégrer un courant représentatif de la somme des photocourants générés par les éléments de conversion photoélectrique des pixels du groupe, et relier les éléments capacitifs de stockage individuels des pixels du groupe à l'élément capacitif de stockage partagé de façon à répartir les charges photogénérées entre l'élément capacitif de stockage partagé et les éléments capacitifs de stockage individuels ; et

b) pendant une deuxième sous-période d'intégration suivant la première sous-période d'intégration, dans chaque pixel du groupe, isoler l'élément capacitif de stockage individuel du pixel de l'élément capacitif de stockage partagé et relier l'élément de conversion photoélectrique du pixel à l'élément capacitif de stockage individuel du pixel de façon à intégrer dans l'élément capacitif de stockage individuel du pixel un courant représentatif du photocourant généré par l'élément de conversion photoélectrique du pixel.

Selon un mode de réalisation, le circuit de contrôle est adapté à, à l'étape a), mettre en oeuvre les étapes successives suivantes :

a1) pendant une première partie de la première sous-période d'intégration, relier les éléments de conversion photoélectrique des pixels du groupe à l'élément capacitif de stockage partagé et isoler, dans chaque pixel du groupe, l'élément capacitif de stockage individuel du pixel de l'élément capacitif de stockage partagé, de façon à intégrer dans le seul élément capacitif de stockage partagé un courant représentatif de la somme des photocourants générés par les éléments de conversion photoélectrique des pixels du groupe ; et

a2) pendant une deuxième partie de la première sous-période d'intégration, relier les éléments capacitifs de stockage individuels des pixels du groupe à l'élément capacitif de stockage partagé de façon à répartir entre l'élément capacitif de stockage partagé et les éléments capacitifs de stockage individuels les charges photogénérées par les éléments de conversion photoélectrique des pixels du groupe pendant la première sous-période d'intégration.

Selon un mode de réalisation, le circuit de contrôle est en outre adapté à, dans chaque pixel du groupe, pendant la première partie de la première sous-période d'intégration, lire une valeur représentative du niveau de tension de l'élément capacitif de stockage individuel du pixel, correspondant à une valeur de sortie d'une phase d'acquisition précédente.

Selon un mode de réalisation, le circuit de contrôle est en outre configuré pour, dans chaque pixel du groupe, pendant la première partie de la première sous-période d'intégration et après la lecture de la valeur de sortie de la phase d'acquisition précédente, réinitialiser l'élément capacitif de stockage individuel du pixel.

Selon un mode de réalisation, le circuit de contrôle est adapté à, à l'étape a), relier les éléments capacitifs de stockage individuels des pixels du groupe à l'élément capacitif de stockage partagé pendant toute la durée de la première sous-période d'intégration.

Selon un mode de réalisation, le circuit de contrôle est en outre configuré pour, dans chaque pixel du groupe, à l'issue de la deuxième sous-période d'intégration, lire une valeur représentative du niveau de tension de l'élément capacitif de stockage individuel du pixel, correspondant à une valeur de sortie de la phase d'acquisition courante.

Selon un mode de réalisation, le circuit de contrôle est en outre configuré pour lire une valeur représentative du niveau de tension de l'élément capacitif de stockage partagé à la fin de la première sous-période d'intégration.

Selon un mode de réalisation, le capteur comporte en outre un circuit de traitement adapté à déterminer, pour chaque pixel du groupe, une valeur de sortie finalisée en tenant compte des valeurs de sortie de la phase d'acquisition courante de l'ensemble des pixels du groupe.

Selon un mode de réalisation, la valeur de sortie finalisée de chaque pixel est une somme pondérée des valeurs de sortie de la phase d'acquisition courante de l'ensemble des pixels du groupe.

Selon un mode de réalisation :

chaque pixel comprend une photodiode fournissant un photocourant sur un premier noeud du pixel, et un transistor d'échantillonnage reliant le premier noeud à l'élément capacitif de stockage individuel du pixel ; et

chaque groupe élémentaire de pixels comprend un jeu de transistors de contrôle reliant le premier noeud de chaque pixel du groupe à l'élément capacitif de stockage partagé du groupe.

Selon un mode de réalisation, chaque pixel comprend en outre un élément capacitif de stockage individuel supplémentaire connecté au premier noeud.

Selon un mode de réalisation, le circuit de contrôle est adapté à régler un premier instant de commutation entre les première et deuxième parties de la première période d'intégration et un deuxième instant de commutation entre les première et deuxième périodes d'intégration en fonction d'un niveau de luminosité moyen reçu par le capteur.

Selon un mode de réalisation, le réglage des premier et deuxième instants de commutation est réalisé de façon globale pour tous les groupes élémentaires de pixels du capteur.

Selon un mode de réalisation, le réglage des premier et deuxième instants de commutation est réalisé de façon individuelle dans chaque groupe élémentaire de pixels du capteur.

Selon un mode de réalisation, chaque groupe élémentaire de pixels comprend un circuit de réglage local adapté à surveiller l'évolution de la tension aux bornes de l'élément capacitif de stockage partagé pendant une phase de réglage au début de la première sous-période d'intégration, et à fixer les premier et deuxième instants de commutation en fonction de l'évolution constatée de la tension aux bornes de l'élément capacitif de stockage partagé pendant la phase de réglage.

Selon un mode de réalisation, le réglage des premier et deuxième instants de commutation est réalisé en tenant compte d'un niveau de luminosité mesuré lors d'une ou plusieurs phases d'acquisition précédentes.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est un schéma électrique partiel d'un premier exemple d'un capteur d'images ;
la figure 2 est un schéma électrique partiel d'un deuxième exemple d'un capteur d'images ;
la figure 3 est un schéma électrique partiel d'un troisième exemple d'un capteur d'images ;
la figure 4 est un schéma électrique partiel d'un premier exemple d'un capteur d'images selon un mode de réalisation ;
la figure 5 est un schéma électrique partiel d'un deuxième exemple d'un capteur d'images selon un mode de réalisation ;
la figure 6 est un schéma électrique partiel d'un troisième exemple d'un capteur d'images selon un mode de réalisation ;
la figure 7 est un diagramme illustrant un exemple d'un mode de fonctionnement d'un capteur d'images selon un mode de réalisation ;

la figure 8 est un diagramme illustrant un autre exemple d'un mode de fonctionnement d'un capteur d'images selon un mode de réalisation ;

la figure 9 est un schéma électrique partiel d'un quatrième exemple d'un capteur d'images selon un mode de réalisation ; et

la figure 10 est un schéma électrique partiel d'un cinquième exemple d'un capteur d'images selon un mode de réalisation.

Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les circuits périphériques de contrôle et de lecture des capteurs d'images décrits n'ont pas été détaillés, la réalisation de ces circuits étant à la portée de l'homme du métier à partir des indications de la présente description. Sauf précision contraire, les expressions "approximativement", "sensiblement", et "de l'ordre de" signifient à 10 % près, de préférence à 5 % près. Dans la présente description, on utilise le terme "connecté" pour désigner une liaison électrique directe, sans composant électronique intermédiaire, par exemple au moyen d'une ou plusieurs pistes conductrices, et le terme "couplé" ou le terme "relié", pour désigner soit une liaison électrique directe (signifiant alors "connecté") soit une liaison via un ou plusieurs composants intermédiaires (résistance, diode, condensateur, etc.).

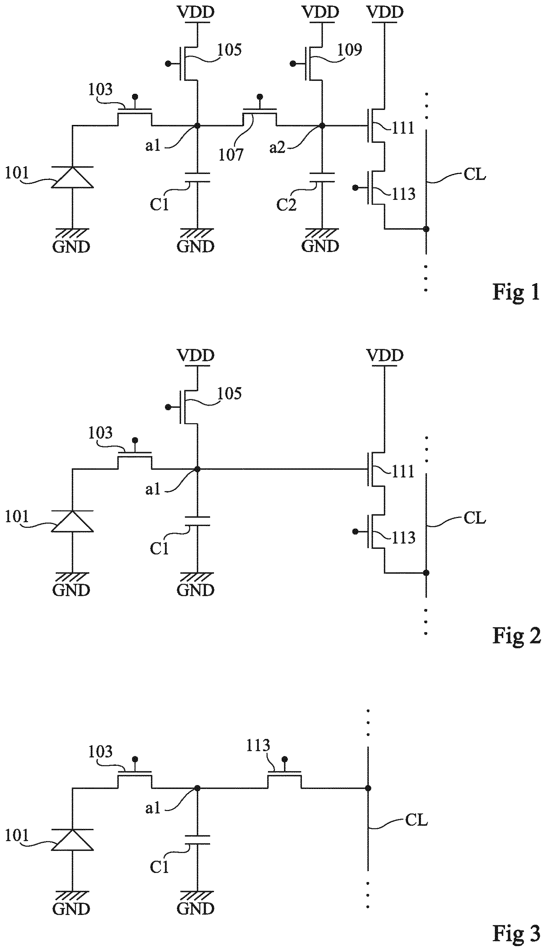

La figure 1 est un schéma électrique partiel d'un exemple d'un capteur d'images. Sur la figure 1, seul un pixel du capteur a été représenté.

Le pixel de la figure 1 est compatible avec un mode de fonctionnement à obturation globale de type IWR (de l'anglais "Integrate While Read", signifiant intégration durant la lecture). Il comprend :

- une photodiode 101 dont l'anode est reliée à un noeud GND d'application d'un potentiel de référence bas ou masse,
- un transistor d'injection 103 dont un premier noeud de conduction est connecté à la cathode de la photodiode 101 et dont un deuxième noeud de conduction est connecté à un premier noeud intermédiaire a1 ;
- un premier élément capacitif de stockage de charges C1, par exemple un condensateur, ayant une première électrode connectée au noeud a1 et une deuxième électrode reliée au noeud GND ;
- un premier transistor de réinitialisation 105 dont un premier noeud de conduction est connecté au noeud a1 et dont un deuxième noeud de conduction est relié à un noeud VDD d'application d'un potentiel de référence haut (c'est-à-dire supérieur au potentiel du noeud GND) du pixel, par exemple un noeud d'application d'un potentiel d'alimentation haut du capteur ;
- un transistor d'échantillonnage 107 dont un premier noeud de conduction est connecté au noeud a1 et dont un deuxième noeud de conduction est connecté à un deuxième noeud intermédiaire a2 ;
- un deuxième élément capacitif de stockage de charges C2, par exemple un condensateur, ayant une première électrode connectée au noeud a2 et une deuxième électrode reliée au noeud GND ;
- un deuxième transistor de réinitialisation 109 dont un premier noeud de conduction est connecté au noeud a2 et dont un deuxième noeud de conduction est relié au noeud VDD ;
- un transistor de lecture 111 dont un noeud de commande est connecté au noeud a2 et dont un premier noeud de conduction est relié au noeud VDD ; et
- un transistor de sélection 113 dont un premier noeud de conduction est relié à un deuxième noeud de conduction du transistor 111 et dont un deuxième noeud de conduction est relié à une piste conductrice de sortie CL du pixel.

Dans cet exemple, les transistors 103, 105, 107, 109, 111 et 113 sont des transistors MOS à canal N.

En fonctionnement, la grille du transistor d'injection 103 est polarisée, par l'intermédiaire d'un circuit de rétroaction non représenté, de façon à maintenir la cathode de la photodiode 101 à un potentiel sensiblement constant. A titre de variante, un potentiel constant est appliqué sur la grille du transistor 103, ce qui permet de maintenir un potentiel approximativement constant sur la cathode de la photodiode 101. La photodiode 101 et le transistor 103 définissent ainsi un élément de conversion photoélectrique adapté à fournir sur le noeud a1 un photocourant représentatif d'une intensité lumineuse reçue par la photodiode.

Les transistors 105, 107, 109 et 113 sont des transistors de contrôle, par exemple commandés en commutation, par exemple par l'intermédiaire de signaux de commande binaires appliqués sur leurs grilles respectives.

Le transistor 111 est monté en source suiveuse, c'est-à-dire que sa grille est connectée au noeud a2, son drain est relié au noeud VDD, et sa source est connectée au drain du transistor 113. En fonctionnement, le transistor 111 fournit sur sa source un potentiel représentatif du potentiel du noeud a1. Ce potentiel est reporté sur la piste de sortie CL du pixel par l'intermédiaire du transistor de sélection 113 lorsque ce dernier est à l'état fermé (passant).

Le capteur de la figure 1 peut comprendre une pluralité de pixels du type décrit ci-dessus, agencés en matrice selon des lignes et des colonnes. A titre d'exemple, dans chaque colonne de la matrice, les pixels de la colonne partagent une même piste conductrice de sortie CL, les pixels de colonnes distinctes étant connectés à des pistes conductrices de sortie CL distinctes. Les pixels de la matrice sont par exemple commandables simultanément ligne par ligne, c'est-à-dire que, dans chaque ligne de la matrice, les transistors 105, respectivement 107, respectivement 109, respectivement 113 des pixels de la ligne ont leurs grilles de commande connectées à une même première piste conductrice de commande de réinitialisation, respectivement à une même piste conductrice de commande d'échantillonnage, respectivement à une même deuxième piste conductrice de commande de réinitialisation, respectivement à une même piste conductrice de commande de sélection. Les grilles de commande des transistors 105, respectivement 107, respectivement 109, respectivement 113 de pixels de lignes distinctes sont par exemple connectées à des pistes conductrices de commande distinctes.

Un exemple de fonctionnement du capteur de la figure 1 lors d'une phase d'acquisition d'une image va maintenant être décrit. Le procédé de commande décrit ci-après peut être mis en oeuvre par des circuits périphériques de contrôle et de lecture du capteur, non représentés.

On considère un état initial dans lequel, dans chaque pixel du capteur, le transistor d'échantillonnage 107 et le transistor de réinitialisation 109 sont maintenus à l'état ouvert (bloqué) de façon à isoler du reste du pixel l'élément capacitif de stockage C2, dans lequel est mémorisée une information représentative du niveau d'éclairement reçu par le pixel lors d'une période d'intégration précédente.

Lors d'une première étape, les transistors de réinitialisation 105 de tous les pixels du capteur sont fermés, par exemple simultanément, de façon à réinitialiser l'élément capacitif de stockage C1 de chaque pixel à un niveau de tension prédéterminé, par exemple proche du potentiel du noeud VDD. On notera que dans cet exemple, le transistor 105 est un transistor MOS à canal N. Le potentiel appliqué sur le noeud a1 est donc sensiblement égal à MIN(VDD ; $VG_{105}$-$Vth_{105}$), où $VG_{105}$ est la tension appliquée sur la grille du transistor 105 et $Vth_{105}$ est la tension de seuil du transistor 105. A titre d'exemple, on prévoit d'appliquer sur la grille du transistor 105 un potentiel $VG_{105}$ supérieur ou égal à VDD+$Vth_{105}$, de façon à réinitialiser l'élément capacitif C1 à un niveau de tension sensiblement égal au potentiel VDD.

Les transistors de réinitialisation 105 sont ensuite rouverts simultanément dans tous les pixels du capteur, ce qui marque le début d'une période d'intégration simultanée de tous les pixels du capteur.

Pendant la période d'intégration, les niveaux de tension des éléments capacitifs de stockage C2 des pixels du capteur, représentatifs des niveaux d'éclairement reçus par les pixels lors de la période d'intégration précédente, sont successivement lus, ligne par ligne. Pour cela, les transistors de sélection 113 des pixels d'une première ligne du capteur sont d'abord fermés simultanément tandis que les transistors de sélection 113 des pixels des autres lignes du capteur sont maintenus ouverts. Ainsi, dans chaque pixel de la ligne sélectionnée, un potentiel représentatif du niveau de tension de l'élément capacitif C2 du pixel est reporté sur la piste conductrice de sortie CL du pixel. Les niveaux de tension des pistes conductrices de sortie CL du capteur sont alors lus et mémorisés par les circuits périphériques de contrôle et de lecture du capteur. La séquence de lecture est ensuite réitérée en sélectionnant une nouvelle ligne du capteur, et ainsi de suite jusqu'à ce que toutes les lignes aient été lues.

Dans chaque pixel du capteur, après la lecture du niveau de tension de l'élément capacitif C2, l'élément C2 est réinitialisé à un niveau de tension prédéterminé, par exemple proche du potentiel du noeud VDD, par fermeture puis réouverture du transistor 109. Comme expliqué précédemment, le transistor 109 étant, dans cet exemple, un transistor MOS à canal N, le potentiel appliqué sur le noeud a2 est sensiblement égal à MIN(VDD ; $VG_{109}$-$Vth_{109}$), où $VG_{109}$ est la tension appliquée sur la grille du transistor 109 et $Vth_{109}$ est la tension de seuil du transistor 109. A titre d'exemple, on prévoit d'appliquer sur la grille du transistor 109 un potentiel $VG_{109}$ supérieur ou égal à VDD+$Vth_{109}$, de façon à réinitialiser l'élément capacitif C2 à un niveau de tension sensiblement égal au potentiel VDD.

Cette étape de réinitialisation de l'élément capacitif C2 peut se faire de façon simultanée pour tous les pixels du capteur, après la lecture de la dernière ligne de pixels du capteur, ou de façon séquentielle, au fur et à mesure de la lecture des lignes.

Après la lecture et la réinitialisation des éléments capacitifs de stockage C2 de l'ensemble des pixels du capteur, les transistors d'échantillonnage 107 sont fermés simultanément dans tous les pixels du capteur. Dans chaque pixel, les charges photogénérées accumulées dans l'élément capacitif C1 depuis le début de la période d'intégration sont alors partagées entre les éléments capacitifs C1 et C2.

Après une période de fermeture qui fait partie de la période d'intégration, les transistors d'échantillonnage 107 sont rouverts simultanément dans tous les pixels du capteur. Ceci marque la fin de la période d'intégration du capteur. A ce stade, dans chaque pixel du capteur, l'élément capacitif de stockage C2 mémorise un niveau de tension représentatif du niveau d'éclairement reçu par la photodiode du pixel pendant la période d'intégration.

Le procédé reprend alors à partir de la première étape de façon à mettre en oeuvre une nouvelle période d'intégration du capteur et à lire simultanément l'image stockée dans les éléments capacitifs C2.

La figure 2 est un schéma électrique partiel d'un autre exemple d'un capteur d'images. De même que dans l'exemple de la figure 1, seul un pixel du capteur a été représenté sur la figure 2.

Le capteur de la figure 2 diffère du capteur de la figure 1 essentiellement en ce que, dans le capteur de la figure 2, les pixels ne comprennent pas le transistor d'échantillonnage 107, l'élément capacitif C2, et le transistor 109 de réinitialisation de l'élément capacitif C2. Plus particulièrement, dans les pixels du capteur de la figure 2, le noeud a1 est connecté directement à la grille du transistor de lecture 111.

Le capteur de la figure 2 est compatible avec un mode de fonctionnement à obturation déroulante de type ITR (de l'anglais "Integrate Then Read", signifiant lecture après l'intégration).

Un exemple de fonctionnement du capteur de la figure 2 lors d'une phase d'acquisition d'une image va maintenant être décrit. Dans cet exemple, les pixels d'une même ligne du capteur sont commandés simultanément suivant une même séquence de commande, et les différentes lignes du capteur sont commandées successivement selon des séquences de commande identiques ou similaires, avec un décalage temporel entre deux lignes successives au moins égal à la durée d'une phase de lecture d'une ligne de pixels. Seule la séquence de commande d'un unique pixel du capteur est décrite ci-après.

Lors d'une première étape, le transistor 105 du pixel est fermé de façon à réinitialiser l'élément capacitif de stockage C1 du pixel à un niveau de tension proche du potentiel du noeud VDD.

Le transistor de réinitialisation 105 est ensuite rouvert, ce qui marque le début d'une période d'intégration du pixel, au cours de laquelle la tension de l'élément capacitif C1 décroit en fonction du niveau d'éclairement reçu par la photodiode 101 du pixel.

A la fin de la période d'intégration, une phase de lecture du niveau de tension de l'élément capacitif de stockage C1 est mise en oeuvre. Pour cela, le transistor de sélection 113 du pixel est d'abord fermé. Ainsi, un potentiel représentatif du niveau de tension de l'élément capacitif C1 du pixel est reporté sur la piste conductrice de sortie CL du pixel. Le niveau de tension de la piste conductrice de sortie CL du pixel est alors lu et mémorisé par les circuits périphériques de contrôle et de lecture du capteur, puis le transistor de sélection 113 du pixel est rouvert.

Le procédé peut alors reprendre à partir de la première étape de façon à mettre en oeuvre une nouvelle phase d'acquisition d'une valeur de sortie du pixel.

Dans les exemples des figures 1 et 2, les pixels des capteurs sont de type actif, c'est-à-dire qu'ils comprennent un transistor de lecture 111 monté en amplificateur entre le noeud capacitif de lecture a2 (figure 1) ou a1 (figure 2) du pixel et la piste conductrice de sortie CL du pixel. Un transistor de réinitialisation 109 (figure 1) ou 105 (figure 2) est en outre prévu pour la réinitialisation de l'élément capacitif de lecture C2 (figure 1) ou C1 (figure 2) du pixel.

La figure 3 est un schéma électrique partiel d'un autre exemple d'un capteur d'images. De même que dans l'exemple des figures 1 et 2, seul un pixel du capteur a été représenté sur la figure 3.

Les pixels du capteur de la figure 3 sont de type passif, c'est-à-dire qu'ils ne comprennent pas d'amplificateur interne au pixel.

Le capteur de la figure 3 diffère du capteur de la figure 2 essentiellement en ce que, dans le capteur de la figure 3, les pixels ne comprennent pas le transistor de réinitialisation 105 et le transistor d'amplification de lecture 111. Plus particulièrement, dans les pixels du capteur de la figure 3, le transistor de sélection 113 a un premier noeud de conduction connecté au noeud a1 et un deuxième noeud de conduction connecté à la piste conductrice CL.

Le capteur de la figure 3 est compatible avec un mode de fonctionnement à obturation déroulante de type ITR (de l'anglais "Integrate Then Read", signifiant lecture après l'intégration).

Le fonctionnement du capteur de la figure 3 peut être identique à celui du capteur de la figure 2, à la différence près que, dans le capteur de la figure 3, la réinitialisation de l'élément capacitif C1 est réalisée automatiquement pendant la lecture du pixel. Plus particulièrement, lorsque le transistor de sélection 113 est passant, les charges photogénérées contenues dans l'élément capacitif C1 sont transférées sur la piste conductrice de sortie CL du pixel. La masse virtuelle d'un amplificateur (non représenté) connecté à la piste CL s'impose alors sur le noeud a1, ce qui conduit à réinitialiser l'élément capacitif C1. La période d'intégration du pixel démarre à la réouverture du transistor de sélection 113.

A titre de variante, un capteur d'images peut comporter des pixels passifs compatibles avec un fonctionnement de type IWR. Pour cela, les pixels du capteur de la figure 1 peuvent par exemple être modifiés en supprimant les transistors 109 et 111 et en connectant les noeuds de conduction du transistor de sélection 113 respectivement au noeud a2 et à la piste conductrice de sortie CL.

Comme indiqué précédemment, pour maximiser le rapport signal sur bruit à fort flux, on cherche généralement à ce que le flux lumineux converti par l'élément de conversion photoélectrique du pixel pendant la période d'intégration soit le plus important possible. Dans les exemples susmentionnés, ceci implique pour l'élément capacitif C1 du pixel d'avoir une capacité de stockage de charges relativement élevée, et donc un encombrement relativement important.

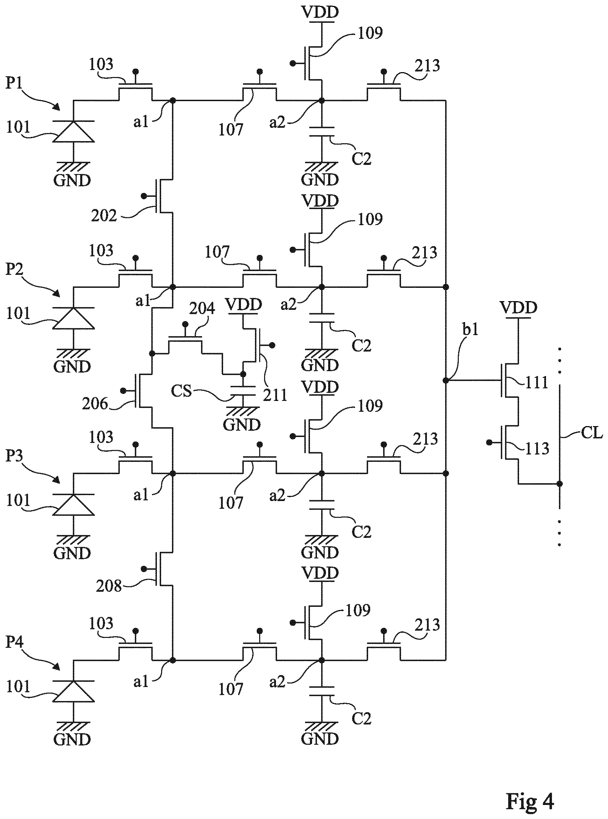

La figure 4 est un schéma électrique partiel d'un exemple d'un capteur d'images selon un mode de réalisation. Le capteur de la figure 4 comprend une pluralité de pixels répartis en plusieurs groupes élémentaires (identiques ou similaires) de plusieurs pixels voisins.

Sur la figure 4, seul un groupe élémentaire de quatre pixels voisins du capteur a été représenté. En pratique, le nombre de pixels voisins dans chaque groupe élémentaire du capteur peut être différent de quatre. A titre d'exemple, le nombre de pixels voisins dans chaque groupe élémentaire est compris dans la plage allant de 2 à 16.

Les pixels du capteur de la figure 4 sont par exemple disposés en matrice selon des lignes et des colonnes, selon un agencement similaire à ce qui a été décrit précédemment en relation avec la figure 1.

Dans l'exemple de la figure 4, chaque groupe élémentaire du capteur est constitué de quatre pixels consécutifs d'une même colonne de pixels du capteur. Les modes de réalisation décrits ne se limitent toutefois pas à ce cas particulier. L'homme du métier saura adapter les modes de réalisation décrits à d'autres agencements des pixels dans chaque groupe élémentaire. A titre d'exemple, chaque groupe élémentaire peut être constitué de pixels voisins d'une même ligne, ou d'une sous-matrice de plusieurs lignes par plusieurs colonnes de pixels voisins.

Les pixels du capteur de la figure 4 comprennent des éléments communs avec les pixels du capteur de la figure 1. Ces éléments communs ne seront pas décrits à nouveau en détail. Dans la suite de la description, seules les différences par rapport au capteur de la figure 1 seront soulignées.

Comme dans l'exemple de la figure 1, chaque pixel comprend une photodiode 101 dont l'anode est reliée à un noeud GND d'application d'un potentiel de référence bas ou masse, un transistor d'injection 103 reliant la cathode de la photodiode 101 à un premier noeud intermédiaire a1, un transistor d'échantillonnage 107 reliant le noeud a1 à un deuxième noeud intermédiaire a2, un élément capacitif de stockage de charges C2 entre le noeud a2 et le noeud GND, et un transistor de réinitialisation 109 reliant le noeud a2 à un noeud VDD d'application d'un potentiel de référence haut du pixel.

Les pixels du capteur de la figure 4 diffèrent des pixels du capteur de la figure 1 en ce qu'ils ne comprennent pas l'élément capacitif de stockage C1 et le transistor de réinitialisation 105.

Dans le capteur de la figure 4, chaque groupe élémentaire de pixels comprend un élément capacitif de stockage CS, par exemple un condensateur, partagé par tous les pixels du groupe. L'élément capacitif de stockage CS remplace les éléments capacitifs de stockage individuels C1 des pixels du capteur de la figure 1.

Avantageusement, à pas interpixels identiques, la capacité de l'élément partagé CS du capteur de la figure 4 peut être supérieure à quatre fois la capacité d'un élément individuel C1 du capteur de la figure 1. En effet, en partageant un élément capacitif CS entre plusieurs pixels voisins du capteur, on réduit les pertes de surface liées aux distances de garde intercapacités qui doivent être respectées dans une architecture du type décrit en relation avec la figure 1.

De plus, du fait de ses dimensions plus importantes, l'élément capacitif partagé CS du capteur de la figure 4 est plus aisé à réaliser que les éléments capacitifs individuels C1 du capteur de la figure 1, notamment lorsque le pas interpixels du capteur est faible. En particulier, les dimensions relativement importantes de l'élément capacitif de stockage partagé CS peuvent donner accès à des technologies de fabrication non disponibles dans des architectures du type décrit en relation avec la figure 1 en raison des trop petites dimensions des éléments capacitifs de stockage individuels C1. Dans un mode de réalisation préféré, l'élément capacitif partagé CS du capteur de la figure 4 est un condensateur de type MIM (métal-isolant-métal), disposé au-dessus des transistors des pixels du groupe, ce qui permet un gain de surface significatif.

Chaque groupe élémentaire de pixels du capteur de la figure 4 comprend en outre un jeu de transistors de contrôle permettant de relier simultanément les noeuds a1 de l'ensemble des pixels du groupe à l'élément capacitif partagé CS, ou d'isoler les noeuds a1 des pixels du groupe de l'élément CS.

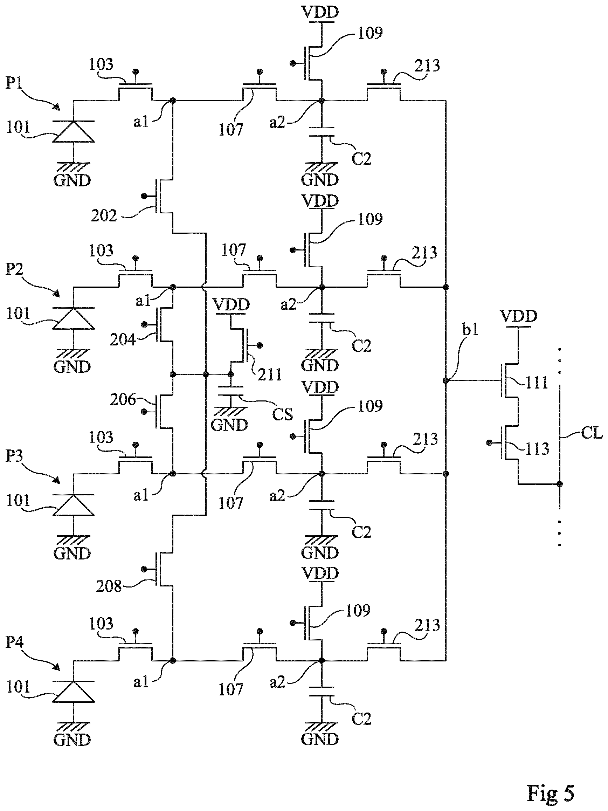

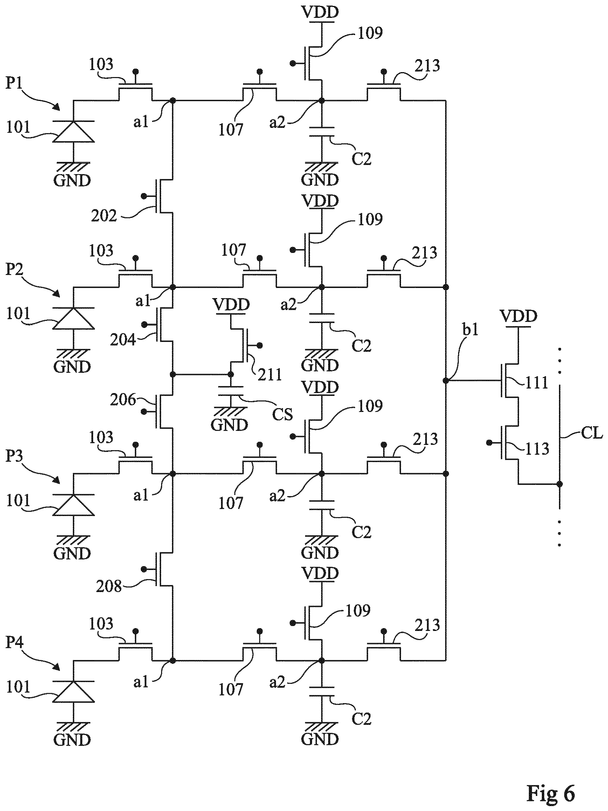

Plus particulièrement, dans l'exemple représenté, chaque groupe de pixels comprend un jeu de quatre transistors de contrôle 202, 204, 206 et 208. On désigne respectivement par les références P1, P2, P3 et P4 les quatre pixels consécutifs d'un groupe élémentaire de pixels du capteur. Le transistor 202 a un premier noeud de conduction connecté au noeud a1 du pixel P1 et un deuxième noeud de conduction connecté au noeud a1 du pixel P2. Le transistor 204 a un premier noeud de conduction connecté au noeud a1 du pixel P2 et un deuxième noeud de conduction connecté à une première électrode de l'élément capacitif CS. Le transistor 206 a un premier noeud de conduction connecté au noeud a1 du pixel P2 et un deuxième noeud de conduction connecté au noeud a1 du pixel P3. Le transistor 208 a un premier noeud de conduction connecté au noeud a1 du pixel P3 et un deuxième noeud de conduction connecté au noeud a1 du pixel P4. Dans cet exemple, la deuxième électrode de l'élément capacitif CS est reliée au noeud GND. Lorsque les transistors 202, 204, 206 et 208 sont fermés, les noeuds a1 des quatre pixels du groupe sont reliés entre eux et à la première électrode de l'élément CS. Lorsque les transistors 202, 204, 206 et 208 sont ouverts, les noeuds a1 des quatre pixels du groupe sont isolés les uns des autres et isolés de la première électrode de l'élément CS. On notera que d'autres agencements des transistors 202, 204, 206 et 208 peuvent être prévus pour obtenir ces deux configurations de fonctionnement. Par exemple, les transistors 202, 204, 206 et 208 peuvent relier directement les noeuds a1 des pixels P1, P2, P3 et P4 respectivement à la première électrode de l'élément capacitif CS (connexion en étoile). Cette configuration est représentée sur la figure 5. A titre de variante, le transistor 202 relie le noeud a1 du pixel P1 au noeud a1 du pixel P2, le transistor 204 relie le noeud a1 du pixel P2 à la première électrode de l'élément CS, le transistor 206 relie le noeud a1 du pixel P3 à la première électrode de l'élément CS, et le transistor 208 relie le noeud a1 du pixel P4 au noeud a1 du pixel P3. Cette configuration est représentée sur la figure 6.

Chaque groupe élémentaire de pixels du capteur de la figure 4 comprend en outre un transistor 211 de réinitialisation de l'élément capacitif partagé CS, dont un premier noeud de conduction est connecté à la première électrode de l'élément CS, et dont un deuxième noeud de conduction est relié au noeud VDD.

Dans l'exemple de la figure 4, le circuit de sélection et de lecture formé par les transistors 111 et 113 est mutualisé entre les pixels d'un même groupe élémentaire. Plus particulièrement, dans l'exemple de la figure 4, chaque pixel comprend un transistor de sélection supplémentaire 213 dont un premier noeud de conduction est connecté au noeud a2 du pixel et dont un deuxième noeud de conduction est connecté à un noeud b1 commun à tous les pixels du groupe. Le transistor de lecture 111, commun à tous les pixels du groupe, a sa grille connectée au noeud b1. Comme dans l'exemple de la figure 1, le transistor 111 a un premier noeud de conduction relié au noeud VDD, et le transistor de sélection 113 (également commun à tous les pixels du groupe) a un premier noeud de conduction relié à un deuxième noeud de conduction du transistor 111 et un deuxième noeud de conduction relié à une piste conductrice de sortie CL du groupe. Ainsi, dans cet exemple, au sein de chaque groupe élémentaire, les différents pixels du groupe sont lus séquentiellement par l'intermédiaire d'un même circuit de sélection et de lecture 111, 113, ce qui permet de réduire le nombre de transistors total du capteur. Les modes de réalisation décrits ne se limitent toutefois pas à ce cas particulier. A titre de variante, chaque pixel peut comprendre son propre circuit de lecture et de sélection 111, 113 relié directement au noeud a2 du pixel comme dans l'exemple de la figure 1, les transistors 213 étant alors omis.

Dans cet exemple, les transistors 202, 204, 206, 208, 211 et 213 sont des transistors MOS à canal N. En fonctionnement, les transistors 202, 204, 206, 208, 211 et 213 sont par exemple commandés en commutation, par exemple par l'intermédiaire de signaux binaires appliqués sur leurs grilles respectives.

Un exemple de fonctionnement du capteur de la figure 4 lors d'une phase d'acquisition d'une image va maintenant être décrit. Le procédé de commande décrit ci-après peut être mis en oeuvre par des circuits périphériques de contrôle et de lecture du capteur, non représentés.

On considère un état initial dans lequel, dans chaque pixel du capteur, le transistor d'échantillonnage 107 et le transistor de réinitialisation 109 sont à l'état ouvert (bloqué) de façon à isoler du reste du pixel l'élément capacitif de stockage individuel C2, dans lequel est mémorisée une information représentative du niveau d'éclairement reçu par les pixels du groupe lors d'une période d'intégration précédente.

Lors d'une première étape, les transistors 202, 204, 206 et 208 de tous les groupes élémentaires de pixels du capteur sont fermés, par exemple simultanément, de façon à relier, dans chaque groupe de pixels, les noeuds a1 de tous les pixels du groupe à l'élément capacitif de stockage partagé CS du groupe. Les transistors de réinitialisation 211 de tous les groupes élémentaires de pixels du capteur sont ensuite fermés, par exemple simultanément, de façon à réinitialiser l'élément capacitif de stockage partagé CS de chaque groupe à un niveau de tension prédéterminé, par exemple proche du potentiel du noeud VDD.

Les transistors de réinitialisation 211 sont ensuite rouverts simultanément dans tous les pixels du capteur, ce qui marque le début d'une période d'intégration simultanée de tous les pixels du capteur. Plus particulièrement, l'instant d'ouverture des transistors de réinitialisation 211 marque le début d'une première sous-période de la période d'intégration du capteur, pendant laquelle, dans chaque groupe élémentaire de pixels, les photocourants générés par les éléments de conversion photoélectrique 101, 103 des différents pixels du groupe sont sommés et intégrés dans l'élément capacitif de stockage partagé CS du groupe.

Pendant une première partie de la première sous-période d'intégration, les niveaux de tension des éléments capacitifs de stockage C2 des pixels du capteur, représentatifs des niveaux d'éclairement reçus lors de la période d'intégration précédente, sont successivement lus, par exemple ligne par ligne, par l'intermédiaire des transistors 213, 111, 113 et des pistes conductrices CL du capteur.

Dans chaque pixel du capteur, après la lecture du niveau de tension de l'élément capacitif C2, l'élément C2 est réinitialisé à un niveau de tension prédéterminé, par exemple proche du potentiel du noeud VDD, par fermeture puis réouverture du transistor 109. Cette étape de réinitialisation de l'élément capacitif C2 peut se faire de façon simultanée pour tous les pixels du capteur, après la lecture de la dernière ligne de pixels du capteur, ou de façon séquentielle, au fur et à mesure de la lecture des lignes.

Après la lecture et la réinitialisation des éléments capacitifs de stockage C2 de tous les pixels du capteur, les transistors d'échantillonnage 107 sont fermés simultanément dans tous les pixels du capteur. Dans chaque groupe élémentaire de pixels du capteur, les charges photogénérées accumulées dans l'élément capacitif partagé CS depuis le début de la période d'intégration sont alors partagées entre l'élément capacitif CS et les éléments capacitifs individuels C2 des quatre pixels du groupe. Ceci marque la fin de la première partie et le début d'une deuxième partie de la première sous-période d'intégration.

Pendant la deuxième partie de la première sous-période d'intégration, la somme des photocourants générés par les photodiodes des pixels de chaque groupe est intégrée non plus seulement dans l'élément capacitif partagé CS du groupe, mais aussi dans les éléments capacitifs individuels C2 des pixels du groupe (chacun des éléments capacitifs individuels C2 étant relié en parallèle de l'élément capacitif partagé CS).

Les transistors de contrôle 202, 204, 206 et 208 sont ensuite ouverts simultanément dans tous les groupes élémentaires de pixels du capteur. L'instant d'ouverture des transistors 202, 204, 206 et 208 marque la fin de la première sous-période de la période d'intégration du capteur, et le début d'une deuxième sous-période de la période d'intégration, permettant de différencier les niveaux de luminosité reçus par les différents pixels d'un même groupe élémentaire de pixels du capteur. Pendant la deuxième sous-période d'intégration, dans chaque pixel du capteur, le photocourant généré par la photodiode du pixel est intégré dans le seul élément capacitif de stockage individuel C2 du pixel, et non plus dans l'élément capacitif partagé CS du groupe élémentaire auquel appartient le pixel.

Les transistors d'échantillonnage 107 sont ensuite rouverts simultanément dans tous les pixels du capteur, ce qui marque la fin de la deuxième sous-période d'intégration, et, plus généralement, la fin de la période d'intégration du capteur.

A ce stade, dans chaque pixel du capteur, l'élément capacitif de stockage C2 mémorise un niveau de tension comportant une composante représentative de la somme des niveaux de luminosité reçus par les photodiodes des quatre pixels du groupe élémentaire auquel appartient le pixel pendant la première sous-période d'intégration, et une composante représentative du niveau de luminosité reçu par la seule photodiode du pixel pendant la deuxième sous-période d'intégration.

Le procédé reprend alors à partir de la première étape de façon à mettre en oeuvre une nouvelle période d'intégration du capteur et à lire simultanément les données stockées dans les éléments capacitifs C2.

Pour construire une image représentative de la scène à partir des données lues dans les éléments capacitifs C2, un traitement est appliqué permettant de calculer, pour chaque pixel du capteur, à partir des valeurs lues dans les éléments capacitifs C2 des quatre pixels du groupe élémentaire auquel appartient le pixel, une valeur représentative du niveau d'éclairement reçu par le pixel pendant la période d'intégration complète. Ce traitement peut être mis en oeuvre par un circuit de calcul inclus dans les circuits périphériques de contrôle et de lecture du capteur, ou par un circuit de calcul externe au capteur. Un exemple d'un tel traitement va maintenant être décrit.

On désigne ici par T1 la durée de la première sous période d'intégration (allant de l'instant de fermeture des transistors de réinitialisation 211 à l'instant d'ouverture des transistors 202, 204, 206 et 208) et par T2 la durée de la deuxième sous-période d'intégration (allant de l'instant d'ouverture des transistors 202, 204, 206 et 208 à l'instant d'ouverture des transistors d'échantillonnage 107). On désigne en outre par Q1, Q2, Q3 et Q4 les quantités totales de charges photogénérées par les photodiodes des pixels P1, P2, P3 et P4 respectivement pendant la période d'intégration complète T1+T2. On suppose en outre que le flux lumineux reçu par chaque pixel du capteur pendant la période d'intégration complète $T_{int}$=T1+T2 est constant ou peut être considéré constant.

Dans chacun des pixels Pi d'un même groupe élémentaire de pixels (avec i entier allant de 1 à 4 dans cet exemple), la variation $\Delta Vi_{T1}$ du niveau de tension de l'élément capacitif de stockage individuel C2 du pixel, résultant de l'intégration des photocourants générés par les photodiodes des quatre pixels du groupe pendant la sous-période d'intégration T1, peut s'exprimer comme suit :

$$\Delta Vi_{T1} = \frac{(Q1 + Q2 + Q3 + Q4)}{CS + 4*C2} * \frac{T1}{T1 + T2}$$

De plus, dans chacun des pixels Pi du groupe, la variation $\Delta Vi_{T2}$ du niveau de tension de l'élément capacitif de stockage individuel C2 du pixel, résultant de l'intégration du photocourant généré par la photodiode du pixel pendant la sous-période d'intégration T2, peut s'exprimer comme suit :

$$\Delta Vi_{T2} = \frac{Qi}{C2} * \frac{T2}{T1 + T2}$$

En définissant les variables a et b suivantes :

$$a = \frac{1}{CS + 4*C2} * \frac{T1}{T1 + T2}$$

$$b = \frac{1}{C2} * \frac{T2}{T1 + T2}$$

et en désignant par $\Delta Vi_{T1+T2} = \Delta Vi_{T1} + \Delta Vi_{T2}$ la variation totale du niveau de tension de l'élément capacitif de stockage individuel C2 du pixel Pi résultant de l'intégration des photocourants générés par les pixels du groupe pendant la période d'intégration complète T1+T2, lue sur la piste conductrice de sortie CL du pixel Pi lors de la phase de lecture du pixel, on obtient le système d'équations suivant :

$$\Delta V1_{T1+T2} = (Q1+Q2+Q3+Q4)*a + Q1*b$$

$$\Delta V2_{T1+T2} = (Q1+Q2+Q3+Q4)*a + Q2*b$$

$$\Delta V3_{T1+T2} = (Q1+Q2+Q3+Q4)*a + Q3*b$$

$$\Delta V4_{T1+T2} = (Q1+Q2+Q3+Q4)*a + Q4*b$$

Ce système peut être inversé comme suit pour déterminer les valeurs Q1, Q2, Q3 et Q4 représentatives des niveaux d'éclairement reçus par les photodiodes des pixels P1, P2, P3 et P4 respectivement, à partir des valeurs de sortie $\Delta V1_{T1+T2}$, $\Delta V2_{T1+T2}$, $\Delta V3_{T1+T2}$ et $\Delta V4_{T1+T2}$ des pixels :

$$Q1=1/(4ab+b^2)*[(3a+b)*\Delta V1_{T1+T2}-a*(\Delta V2_{T1+T2}+\Delta V3_{T1+T2}+\Delta V4_{T1+T2})]$$

$$Q2=1/(4ab+b^2)*[(3a+b)*\Delta V2_{T1+T2}-a*(\Delta V1_{T1+T2}+\Delta V3_{T1+T2}+\Delta V4_{T1+T2})]$$

$$Q3=1/(4ab+b^2)*[(3a+b)*\Delta V3_{T1+T2}-a*(\Delta V1_{T1+T2}+\Delta V2_{T1+T2}+\Delta V4_{T1+T2})]$$

$$Q4=1/(4ab+b^2)*[(3a+b)*\Delta V4_{T1+T2}-a*(\Delta V1_{T1+T2}+\Delta V2_{T1+T2}+\Delta V3_{T1+T2})]$$

Plus généralement, quel que soit le nombre de pixels par groupe élémentaire de pixels du capteur, les formules de calcul des valeurs Qi peuvent être déterminées de façon similaire à ce qui vient d'être décrit, et mémorisées dans le circuit de calcul prévu pour traiter des valeurs de sortie de la matrice de pixels.

Un avantage du capteur de la figure 4 est que, dans la mesure où la capacité de l'élément de stockage partagé CS est supérieure à quatre fois la capacité d'un élément de stockage individuel C1 du capteur de la figure 1, il permet, à pas interpixels identiques, de stocker une quantité de charges photogénérées plus élevée que le capteur de la figure 1, ce qui permet d'améliorer le rapport signal sur bruit.

Pour une période d'intégration complète $T_{int}$=T1+T2 donnée, l'instant de commutation entre la première sous-période d'intégration T1 et la deuxième sous-période d'intégration T2 (c'est-à-dire l'instant d'ouverture des transistors 202, 204, 206 et 208), peut être ajusté en fonction de caractéristiques de la scène dont on souhaite acquérir une image, par exemple en fonction du niveau de luminosité moyen reçu par le capteur.

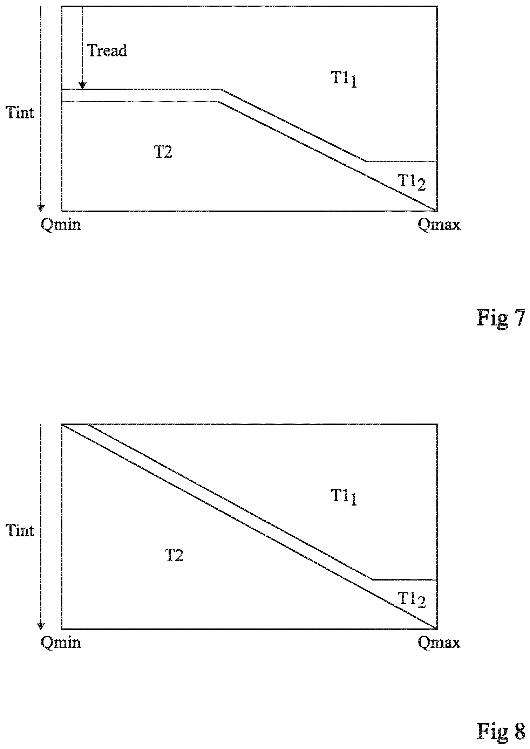

Les figures 7 et 8 sont des diagrammes représentant l'évolution, en fonction de la quantité de charges photogénérées pendant la période d'intégration complète $T_{int}$ (en abscisse, allant d'une valeur minimale Qmin à une valeur maximale Qmax), des plages temporelles (en ordonnée) dans lesquelles peuvent être choisies respectivement la première partie $T1_1$ de la sous-période d'intégration T1, la deuxième partie $T1_2$ de la sous-période d'intégration T1, et la période d'intégration T2.

A titre d'exemple, en cas de faible luminosité, la sous-période d'intégration T1 peut être choisie relativement courte et la sous-période d'intégration T2 relativement longue, et, en cas de forte luminosité, la sous-période d'intégration T1 peut être choisie relativement longue et la sous-période d'intégration T2 relativement courte.

Dans le cas d'un fonctionnement de type IWR tel que décrit ci-dessus, et comme cela est illustré par le diagramme de la figure 7, la limite inférieure pour la durée de la première partie $T1_1$ de la première sous-période d'intégration T1 est la durée minimale $T_{read}$ nécessaire à la lecture de l'ensemble des valeurs mémorisées dans les éléments capacitifs C2 des pixels du capteur.

Par ailleurs, la limite supérieure pour la durée de la première partie $T1_1$ de la sous-période d'intégration T1 est fixée par le courant de la photodiode correspondant au flux photonique maximum ciblé et par l'élément capacitif partagé CS.

Les modes de réalisation décrits ne se limitent toutefois pas à des capteurs ayant un fonctionnement de type IWR. A titre de variante, la lecture des valeurs mémorisées dans les éléments C2 peut être effectuée entre deux périodes d'intégration successives, auquel cas il n'existe pas de limite inférieure à la durée de la première partie $T1_1$ de la sous-période d'intégration T1. Ce mode de fonctionnement est illustré par le diagramme de la figure 8.

Le réglage des instants de commutation entre les sous-périodes $T1_1$ et $T1_2$ puis $T1_2$ et $T2$ peut être effectué de manière globale pour tout le capteur, ou de manière individuelle dans chaque groupe élémentaire de pixels du capteur. A titre d'exemple, chaque groupe élémentaire de pixels peut comprendre un circuit de réglage local (non visible sur les figures) adapté à surveiller l'évolution de la tension aux bornes de l'élément capacitif CS pendant une phase de réglage au début de la première sous-période d'intégration T1, et à fixer l'instant de commutation entre les sous-périodes T1 et T2 en fonction de l'évolution constatée de la tension aux bornes de l'élément CS pendant la phase de réglage. De façon alternative, le réglage des durées des sous-périodes d'intégration T1 et T2 peut être effectué en fonction des valeurs de pixels acquises lors d'une phase d'acquisition (ou trame) précédente.

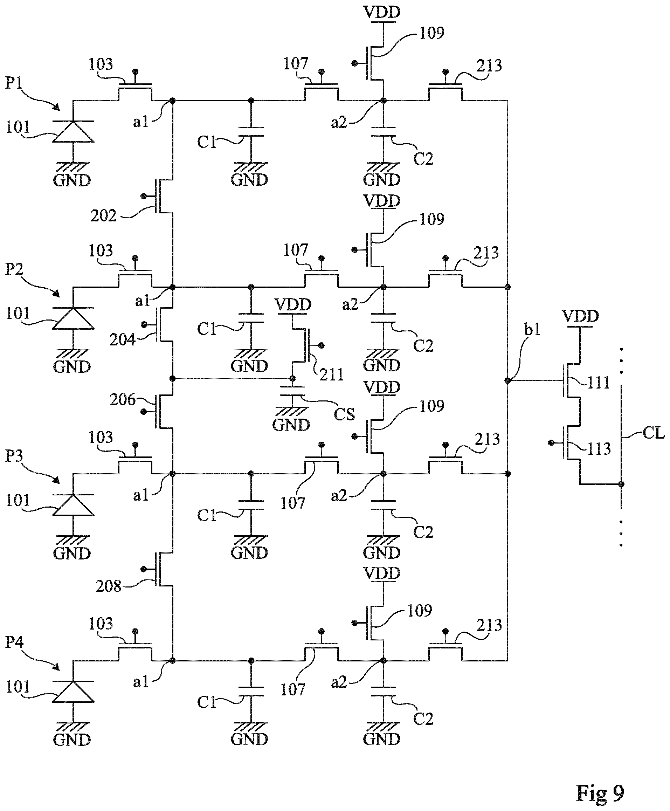

La figure 9 est un schéma électrique partiel d'un autre exemple d'un capteur d'images selon un mode de réalisation. Le capteur de la figure 9 comprend des éléments communs avec le capteur de la figure 6. Ces éléments ne seront pas décrits à nouveau en détail ci-après. Dans la suite de la description, seules les différences entre le capteur de la figure 6 et le capteur de la figure 9 seront mises en exergue.

Comme dans l'exemple de la figure 6, le capteur de la figure 9 comprend une pluralité de pixels répartis en plusieurs groupes élémentaires (identiques ou similaires) de plusieurs pixels voisins. De plus, comme dans l'exemple de la figure 6, seul un groupe élémentaire de quatre pixels voisins P1, P2, P3, P4 du capteur a été représenté sur la figure 9.

Les pixels du capteur de la figure 9 comprennent les mêmes éléments que les pixels du capteur de la figure 6, agencés sensiblement de la même manière.

Dans le capteur de la figure 9, chaque pixel comprend en outre, comme dans l'exemple de la figure 1, un élément capacitif de stockage individuel C1 distinct de l'élément C2, entre le noeud a1 et le noeud GND, et un transistor de réinitialisation 105 reliant le noeud a1 au noeud VDD.

Le fonctionnement du capteur de la figure 9 est par exemple similaire au fonctionnement du capteur de la figure 6, excepté concernant les points suivants.

Dans le capteur de la figure 9, lors de la première étape, avant le début de la première sous-période d'intégration T1, la réinitialisation de l'élément capacitif de stockage partagé CS par fermeture simultanée des transistors 202, 204, 206, 208 et 211 conduit également à réinitialiser les éléments capacitifs de stockage individuels C1.

De plus, dans le capteur de la figure 9, pendant la première sous-période d'intégration T1, dans chaque groupe élémentaire de pixels, les charges photogénérées dans les photodiodes des pixels P1, P2, P3 et P4 du groupe sont réparties entre l'élément capacitif partagé CS et les éléments capacitifs individuels C1 des différents pixels du groupe.

La variante de réalisation de la figure 9 présente l'avantage de permettre de stocker dans chaque groupe élémentaire de pixels, pendant la première sous-période d'intégration, une quantité de charges photogénérées plus importante que dans les exemples précédents.

Bien entendu, la variante de la figure 9 peut être adaptée aux exemples de réalisation des figures 4 et 5.

A titre d'exemple, l'architecture de la figure 9 peut fonctionner selon un mode de fonctionnement de type IWR, le choix des durées des sous-périodes d'intégration T1 et T2 pouvant alors être réalisé conformément au diagramme de la figure 7 ou conformément au diagramme de la figure 8.

On notera en particulier que dans la variante de la figure 9, le capteur peut être configuré pour fonctionner de façon similaire à ce qui a été décrit en relation avec la figure 1. Pour cela, les transistors 202, 204, 206 et 208 peuvent être maintenus ouverts pendant toute la durée de la période d'intégration du capteur, l'élément capacitif de stockage partagé CS n'étant alors pas utilisé. Dans ce cas, la période d'intégration permettant de différentier les valeurs des pixels du groupe commence dès le début de la période d'intégration totale (fonctionnement du type illustré par le diagramme de la figure 8).

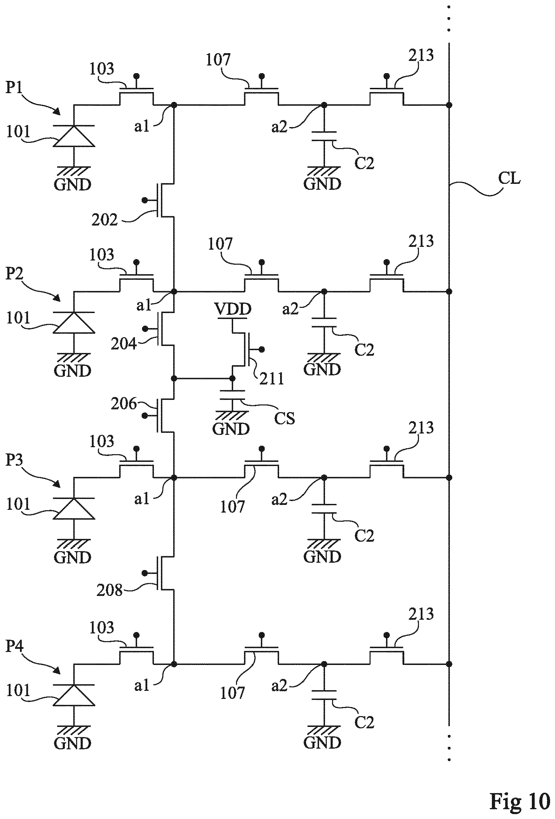

La figure 10 est un schéma électrique partiel d'un autre exemple d'un capteur d'images selon un mode de réalisation. Dans cet exemple, les pixels du capteur sont des pixels passifs.

Le capteur de la figure 10 comprend des éléments communs avec le capteur de la figure 6. Ces éléments ne seront pas décrits à nouveau en détail ci-après. Dans la suite de la description, seules les différences entre le capteur de la figure 6 et le capteur de la figure 10 seront mises en exergue.

Comme dans l'exemple de la figure 6, le capteur de la figure 10 comprend une pluralité de pixels répartis en plusieurs groupes élémentaires (identiques ou similaires) de plusieurs pixels voisins. De plus, comme dans l'exemple de la figure 6, seul un groupe élémentaire de quatre pixels voisins P1, P2, P3, P4 du capteur a été représenté sur la figure 10.

Les pixels du capteur de la figure 10 comprennent les mêmes éléments que les pixels du capteur de la figure 6, agencés sensiblement de la même manière, excepté les transistors de réinitialisation 109 qui sont omis dans le capteur de la figure 10.

De plus, dans le capteur de la figure 10, le circuit de lecture 111, 113 commun aux pixels d'un même groupe est omis.

Dans chaque pixel du capteur de la figure 10, le transistor de sélection 213 du pixel relie directement, par ses noeuds de conduction, le noeud a2 du pixel à la piste conductrice de sortie CL.

Le fonctionnement du capteur de la figure 10 est par exemple similaire au fonctionnement du capteur de la figure 6, à ceci près que la lecture et la réinitialisation de l'élément capacitif C2 de chaque pixel est réalisée de façon similaire à ce qui a été décrit en relation avec la figure 3.

La variante de la figure 10 peut être adaptée aux exemples de réalisation des figures 4, 5 et 9.

## Revendications

1. Capteur d'images comportant une pluralité de pixels répartis en une pluralité de groupes élémentaires de plusieurs pixels chacun, dans lequel :

   chaque pixel comporte un élément de conversion photoélectrique (101) et un élément capacitif de stockage individuel (C2) ; et

   chaque groupe élémentaire de pixels comporte un élément capacitif de stockage partagé (CS),

   le capteur comportant en outre un circuit de contrôle adapté à, lors d'une phase d'acquisition courante d'une image, mettre en oeuvre, dans chaque groupe élémentaire de pixels, les étapes suivantes :

   a) pendant une première sous-période d'intégration (T1), relier les éléments de conversion photoélectrique (101) des pixels du groupe à l'élément capacitif de stockage partagé (CS), de façon à intégrer un courant représentatif de la somme des photocourants générés par les éléments de conversion photoélectrique (101) des pixels du groupe, et relier les éléments capacitifs de stockage individuels (C2) des pixels du groupe à l'élément capacitif de stockage partagé (CS) de façon à répartir les charges photogénérées entre l'élément capacitif de stockage partagé (CS) et les éléments capacitifs de stockage individuels (C2) ; et

   b) pendant une deuxième sous-période d'intégration (T2) suivant la première sous-période d'intégration (T1), dans chaque pixel du groupe, isoler l'élément capacitif de stockage individuel (C2) du pixel de l'élément capacitif de stockage partagé (CS) et relier l'élément de conversion photoélectrique (101) du pixel à l'élément capacitif de stockage individuel (C2) du pixel de façon à intégrer dans l'élément capacitif de stockage individuel (C2) du pixel un courant représentatif du photocourant généré par l'élément de conversion photoélectrique (101) du pixel.

2. Capteur selon la revendication 1, dans lequel le circuit de contrôle est adapté à, à l'étape a), mettre en oeuvre les étapes successives suivantes :

   a1) pendant une première partie ($T1_1$) de la première sous-période d'intégration (T1), relier les éléments de conversion photoélectrique (101) des pixels du groupe à l'élément capacitif de stockage partagé (CS) et isoler, dans chaque pixel du groupe, l'élément capacitif de stockage individuel (C2) du pixel de l'élément capacitif de stockage partagé (CS), de façon à intégrer dans le seul élément capacitif de stockage partagé (CS) un courant représentatif de la somme des photocourants générés par les éléments de conversion photoélectrique (101) des pixels du groupe ; et

   a2) pendant une deuxième partie ($T1_2$) de la première sous-période d'intégration (T1), relier les éléments capacitifs de stockage individuels (C2) des pixels du groupe à l'élément capacitif de stockage partagé (CS) de façon à répartir entre l'élément capacitif de stockage partagé (CS) et les éléments capacitifs de stockage individuels (C2) les charges photogénérées par les éléments de conversion photoélectrique (101) des pixels du groupe pendant la première sous-période d'intégration (T1).

3. Capteur selon la revendication 2, dans lequel le circuit de contrôle est en outre adapté à, dans chaque pixel du groupe, pendant la première partie ($T1_1$) de la première sous-période d'intégration (T1), lire une valeur représentative du niveau de tension de l'élément capacitif de stockage individuel (C2) du pixel, correspondant à une valeur de sortie d'une phase d'acquisition précédente.

4. Capteur selon la revendication 3, dans lequel le circuit de contrôle est en outre configuré pour, dans chaque pixel du groupe, pendant la première partie ($T1_1$) de la première sous-période d'intégration (T1) et après la lecture de la valeur de sortie de la phase d'acquisition précédente, réinitialiser l'élément capacitif de stockage individuel (C2) du pixel.

5. Capteur selon la revendication 1, dans lequel le circuit de contrôle est adapté à, à l'étape a), relier les éléments capacitifs de stockage individuels (C2) des pixels du groupe à l'élément capacitif de stockage partagé (CS) pendant toute la durée de la première sous-période d'intégration (T1).

**6.** Capteur selon l'une quelconque des revendications 1 à 5, dans lequel le circuit de contrôle est en outre configuré pour, dans chaque pixel du groupe, à l'issue de la deuxième sous-période d'intégration (T2), lire une valeur représentative du niveau de tension de l'élément capacitif de stockage individuel (C2) du pixel, correspondant à une valeur de sortie de la phase d'acquisition courante.

**7.** Capteur selon la revendication 6, dans lequel le circuit de contrôle est en outre configuré pour lire une valeur représentative du niveau de tension de l'élément capacitif de stockage partagé (CS) à la fin de la première sous-période d'intégration (T1).

**8.** Capteur selon la revendication 6 ou 7, comportant en outre un circuit de traitement adapté à déterminer, pour chaque pixel du groupe, une valeur de sortie finalisée en tenant compte des valeurs de sortie de la phase d'acquisition courante de l'ensemble des pixels du groupe.

**9.** Capteur selon la revendication 8, dans lequel la valeur de sortie finalisée de chaque pixel est une somme pondérée des valeurs de sortie de la phase d'acquisition courante de l'ensemble des pixels du groupe.

**10.** Capteur selon l'une quelconque des revendications 1 à 9, dans lequel :

chaque pixel comprend une photodiode (101) fournissant un photocourant sur un premier noeud (a1) du pixel, et un transistor d'échantillonnage (107) reliant le premier noeud (a1) à l'élément capacitif de stockage individuel (C2) du pixel ; et
chaque groupe élémentaire de pixels comprend un jeu de transistors de contrôle (202, 204, 206, 208) reliant le premier noeud (a1) de chaque pixel du groupe à l'élément capacitif de stockage partagé (CS) du groupe.

**11.** Capteur selon la revendication 10, dans lequel chaque pixel comprend en outre un élément capacitif de stockage individuel supplémentaire (C1) connecté au premier noeud (a1).

**12.** Capteur selon la revendication 2, dans lequel le circuit de contrôle est adapté à régler un premier instant de commutation entre les première ($T1_1$) et deuxième ($T1_2$) parties de la première période d'intégration (T1) et un deuxième instant de commutation entre les première (T1) et deuxième (T2) périodes d'intégration en fonction d'un niveau de luminosité moyen reçu par le capteur.

**13.** Capteur selon la revendication 12, dans lequel le réglage des premier et deuxième instants de commutation est réalisé de façon globale pour tous les groupes élémentaires de pixels du capteur.

**14.** Capteur selon la revendication 12, dans lequel le réglage des premier et deuxième instants de commutation est réalisé de façon individuelle dans chaque groupe élémentaire de pixels du capteur.

**15.** Capteur selon la revendication 14, dans lequel chaque groupe élémentaire de pixels comprend un circuit de réglage local adapté à surveiller l'évolution de la tension aux bornes de l'élément capacitif de stockage partagé (CS) pendant une phase de réglage au début de la première sous-période d'intégration (T1), et à fixer les premier et deuxième instants de commutation en fonction de l'évolution constatée de la tension aux bornes de l'élément capacitif de stockage partagé (CS) pendant la phase de réglage.

**16.** Capteur selon l'une quelconque des revendications 12 à 14, dans lequel le réglage des premier et deuxième instants de commutation est réalisé en tenant compte d'un niveau de luminosité mesuré lors d'une ou plusieurs phases d'acquisition précédentes.

**Patentansprüche**

**1.** Bildsensor mit einer Vielzahl von Pixeln, die in einer Vielzahl von elementaren Gruppen mit jeweils einer Vielzahl von Pixeln verteilt ist, wobei:

jedes Pixel ein photoelektrisches Umwandlungselement (101) und ein individuelles kapazitives Speicherelement (C2) aufweist; und
jede elementare Gruppe von Pixeln ein gemeinsames kapazitives Speicherelement (CS) aufweist,
wobei der Sensor ferner eine Steuerschaltung aufweist, die während einer aktuellen Bilderfassungsphase geeignet ist, in jeder elementaren Gruppe von Pixeln die folgenden Schritte zu implementieren:

a) während einer ersten Integrationsunterperiode (T1) Koppeln der photoelektrischen Umwandlungselemente (101) der Pixel der Gruppe mit dem gemeinsamen kapazitiven Speicherelement (CS), um einen Strom zu integrieren, der für die Summe der von den photoelektrischen Umwandlungselementen (101) der Pixel der Gruppe erzeugten Photoströme repräsentativ ist, und Koppeln der individuellen kapazitiven Speicherelemente (C2) der Pixel der Gruppe mit dem gemeinsamen kapazitiven Speicherelement (CS), um die photoerzeugten Ladungen zwischen dem gemeinsamen kapazitiven Speicherelement (CS) und den individuellen kapazitiven Speicherelementen (C2) zu verteilen; und

b) während einer zweiten Integrationsunterperiode (T2) nach der ersten Integrationsunterperiode (T1) in jedem Pixel der Gruppe das Isolieren des individuellen kapazitiven Speicherelements (C2) des Pixels vom gemeinsamen kapazitiven Speicherelement (CS) und Koppeln des photoelektrischen Umwandlungselements (101) des Pixels mit dem individuellen kapazitiven Speicherelement (C2) des Pixels, um in das individuelle kapazitive Speicherelement (C2) des Pixels einen Strom zu integrieren, der für den vom photoelektrischen Umwandlungselement (101) des Pixels erzeugten Photostrom repräsentativ ist.

2.  Sensor nach Anspruch 1, wobei die Steuerschaltung geeignet ist, bei Schritt a) die folgenden aufeinanderfolgenden Schritte zu implementieren:

a1) während eines ersten Teils (T1$_1$) der ersten Integrationsunterperiode (T1), Koppeln der photoelektrischen Umwandlungselemente (101) der Pixel der Gruppe mit dem gemeinsamen kapazitiven Speicherelement (CS) und Isolieren in jedem Pixel der Gruppe, das individuelle kapazitive Speicherelement (C2) des Pixels von dem gemeinsamen kapazitiven Speicherelement (CS), um nur in das gemeinsame kapazitive Speicherelement (CS) einen Strom zu integrieren, der für die Summe der von den photoelektrischen Umwandlungselementen (101) der Pixel der Gruppe erzeugten Photoströme repräsentativ ist; und

a2) während eines zweiten Teils (T1$_2$) der ersten Integrationsunterperiode (T1), Koppeln der individuellen kapazitiven Speicherelemente (C2) der Pixel der Gruppe mit dem gemeinsamen kapazitiven Speicherelement (CS), um zwischen dem gemeinsamen kapazitiven Speicherelement (CS) und den individuellen kapazitiven Speicherelementen (C2) die von den photoelektrischen Umwandlungselementen (101) der Pixel der Gruppe während der ersten Integrationsunterperiode (T1) photoerzeugten Ladungen zu verteilen.

3.  Sensor nach Anspruch 2, wobei die Steuerschaltung ferner geeignet ist, in jedem Pixel der Gruppe während des ersten Teils (T1$_1$) der ersten Integrationsunterperiode (T1) einen Wert zu lesen, der für den Spannungspegel des individuellen kapazitiven Speicherelements (C2) des Pixels, der einem Ausgangswert einer vorherigen Erfassungsphase entspricht, repräsentativ ist.

4.  Sensor nach Anspruch 3, wobei die Steuerschaltung ferner konfiguriert ist, um in jedem Pixel der Gruppe während des ersten Teils (T1$_1$) der ersten Integrationsunterperiode (T1) und nach dem Lesen des Ausgangswerts der vorherigen Erfassungsphase das individuelle kapazitive Speicherelement (C2) des Pixels zurückzusetzen.

5.  Sensor nach Anspruch 1, wobei die Steuerschaltung geeignet ist, bei Schritt a) die individuellen kapazitiven Speicherelemente (C2) der Pixel der Gruppe mit dem gemeinsamen kapazitiven Speicherelement (CS) während der gesamten ersten Integrationsunterperiode (T1) zu koppeln.

6.  Sensor nach einem der Ansprüche 1 bis 5, wobei die Steuerschaltung ferner konfiguriert ist, um von jedem Pixel der Gruppe am Ende der zweiten Integrationsunterperiode (T2) einen Wert zu lesen, der für den Spannungspegel des individuellen kapazitiven Speicherelements (C2) des Pixels, der einem Ausgangswert der Stromerfassungsphase entspricht, repräsentativ ist.

7.  Sensor nach Anspruch 6, wobei die Steuerschaltung ferner konfiguriert ist, um einen Wert zu lesen, der für den Spannungspegel des gemeinsamen kapazitiven Speicherelements (CS) am Ende der ersten Integrationsunterperiode (T1) repräsentativ ist.

8.  Sensor nach Anspruch 6 oder 7, der ferner eine Verarbeitungsschaltung aufweist, die geeignet ist, für jedes Pixel der Gruppe einen endgültigen Ausgangswert unter Berücksichtigung der Ausgangswerte der aktuellen Erfassungsphase aller Pixel der Gruppe zu bestimmen.

9.  Sensor nach Anspruch 8, wobei der endgültige Ausgangswert jedes Pixels eine gewichtete Summe der Ausgangswerte der aktuellen Erfassungsphase aller Pixel der Gruppe ist.

10. Sensor nach einem der Ansprüche 1 bis 9, wobei:

jedes Pixel eine Photodiode (101) aufweist, die einen Photostrom an einen ersten Knoten (a1) des Pixels liefert, und einen Abtasttransistor (107), der den ersten Knoten (a1) mit dem individuellen kapazitiven Speicherelement (C2) des Pixels koppelt; und

jede elementare Pixelgruppe einen Satz von Steuertransistoren (202, 204, 206, 208) aufweist, die den ersten Knoten (a1) jedes Pixels der Gruppe mit dem gemeinsamen kapazitiven Speicherelement (CS) der Gruppe koppelt.

11. Sensor nach Anspruch 10, wobei jedes Pixel ferner ein zusätzliches individuelles kapazitives Speicherelement (C1) aufweist, das mit dem ersten Knoten (a1) verbunden ist.

12. Sensor nach Anspruch 2, wobei die Steuerschaltung geeignet ist, einen ersten Zeitpunkt des Umschaltens zwischen den ersten ($T1_1$) und zweiten ($T1_2$) Teilen der ersten Integrationsperiode (T1) und einen zweiten Zeitpunkt des Umschaltens zwischen der ersten (T1) und zweiten (T2) Integrationsperioden gemäß einem vom Sensor empfangenen durchschnittlichen Helligkeitspegel einzustellen.

13. Sensor nach Anspruch 12, wobei das Einstellen der ersten und zweiten Schaltzeiten im Allgemeinen für alle elementaren Pixelgruppen des Sensors durchgeführt wird.

14. Sensor nach Anspruch 12, wobei das Einstellen der ersten und zweiten Schaltzeiten individuell in jeder elementaren Pixelgruppe des Sensors durchgeführt wird.

15. Sensor nach Anspruch 14, wobei jede elementare Pixelgruppe eine lokale Einstellschaltung aufweist, die geeignet ist, die Änderung der Spannung über dem gemeinsamen kapazitiven Speicherelement (CS) während einer Einstellphase zu Beginn der ersten Integrationsunterperiode (T1) zu überwachen und die ersten und zweiten Schaltzeiten gemäß der beobachteten Änderung der Spannung über dem gemeinsamen kapazitiven Speicherelement (CS) während der Einstellphase einzustellen.

16. Sensor nach einem der Ansprüche 12 bis 14, wobei das Einstellen der ersten und zweiten Schaltzeiten unter Berücksichtigung eines Helligkeitspegels erfolgt, der während einer oder mehrerer vorhergehender Erfassungsphasen gemessen wurde.

**Claims**

1. An image sensor comprising a plurality of pixels distributed in a plurality of elementary groups of a plurality of pixels each, wherein:

each pixel comprises a photoelectric conversion element (101) and an individual capacitive storage element (C2); and

each elementary group of pixels comprises a shared capacitive storage element (CS),

the sensor further comprising a control circuit capable, during a current image acquisition phase, of implementing, in each elementary group of pixels, the steps of:

a) during a first integration sub-period (T1), coupling the photoelectric conversion elements (101) of the pixels of the group to the shared capacitive storage element (CS), to integrate a current representative of the sum of the photo-currents generated by the photoelectric conversion elements (101) of the pixels of the group, and coupling the individual capacitive storage elements (C2) of the pixels of the group to the shared capacitive storage element (CS) to distribute the photogenerated charges between the shared capacitive storage element (CS) and the individual capacitive storage elements (C2); and

b) during a second integration sub-period (T2) following the first integration sub-period (T1), in each pixel of the group, isolating the individual capacitive storage element (C2) of the pixel from the shared capacitive storage element (CS) and coupling the photoelectric conversion element (101) of the pixel to the individual capacitive storage element (C2) of the pixel to integrate in the individual capacitive storage element (C2) of the pixel a current representative of the photocurrent generated by the photoelectric conversion element (101) of the pixel.

2. The sensor of claim 1, wherein the control circuit is capable, at step a), of implementing the successive steps of:

a1) during a first part ($T1_1$) of the first integration sub-period (T1), coupling the photoelectric conversion elements (101) of the pixels of the group to the shared capacitive storage element (CS) and isolating, in each pixel of the group, the individual capacitive storage element (C2) of the pixel from the shared capacitive storage element (CS), to integrate, in the shared capacitive storage element (CS) only, a current representative of the sum of the photocurrents generated by the photoelectric conversion elements (101) of the pixels of the group; and

a2) during a second part ($T1_2$) of the first integration sub-period (T1), coupling the individual capacitive storage elements (C2) of the pixels of the group to the shared capacitive storage element (CS) to distribute between the shared capacitive storage element (CS) and the individual capacitive storage elements (C2) the charges photogenerated by the photoelectric conversion elements (101) of the pixels of the group during the first integration sub-period (T1).

3. The sensor of claim 2, wherein the control circuit is further capable of, in each pixel of the group, during the first part ($T1_1$) of the first integration sub-period (T1), reading a value representative of the voltage level of the individual capacitive storage element (C2) of the pixel, corresponding to an output value of a previous acquisition phase.

4. The sensor of claim 3, wherein the control circuit is further configured to, in each pixel of the group, during the first part ($T1_1$) of the first integration sub-period (T1) and after the reading of the output value of the previous acquisition phase, reset the individual capacitive storage element (C2) of the pixel.

5. The sensor of claim 1, wherein the control circuit is capable of, at step a), coupling the individual capacitive storage elements (C2) of the pixels of the group to the shared capacitive storage element (CS) during the entire first integration sub-period (T1).

6. The sensor of any of claims 1 to 5, wherein the control circuit is further configured to, from each pixel of the group, at the end of the second integration sub-period (T2), read a value representative of the voltage level of the individual capacitive storage element (C2) of the pixel, corresponding to an output value of the current acquisition phase.

7. The sensor of claim 6, wherein the control circuit is further configured to read a value representative of the voltage level of the shared capacitive storage element (CS) at the end of the first integration sub-period (T1).

8. The sensor of claim 6 or 7, further comprising a processing circuit capable of determining, for each pixel of the group, a final output value by taking into account the output values of the current acquisition phase of all the pixels of the group.

9. The sensor of claim 8, wherein the final output value of each pixel is a weighted sum of the output values of the current acquisition phase of all the pixels of the group.

10. The sensor of any of claims 1 to 9, wherein:

each pixel comprises a photodiode (101) supplying a photocurrent on a first node (a1) of the pixel, and a sampling transistor (107) coupling the first node (a1) to the individual capacitive storage element (C2) of the pixel; and

each elementary group of pixels comprises a set of control transistors (202, 204, 206, 208) coupling the first node (a1) of each pixel of the group to the shared capacitive storage element (CS) of the group.

11. The sensor of claim 10, wherein each pixel further comprises an additional individual capacitive storage element (C1) connected to the first node (a1).

12. The sensor of claim 2, wherein the control circuit is capable of setting a first time of switching between the first ($T1_1$) and second ($T1_2$) parts of the first integration period (T1) and a second time of switching between the first (T1) and second (T2) integration periods according to an average luminosity level received by the sensor.

13. The sensor of claim 12, wherein the setting of the first and second switching times is generally performed for all the elementary groups of pixels of the sensor.

14. The sensor of claim 12, wherein the setting of the first and second switching times is performed individually in each elementary group of pixels of the sensor.

15. The sensor of claim 14, wherein each elementary pixel group comprises a local setting circuit capable of monitoring the variation of the voltage across the shared capacitive storage element (CS) during a setting phase at the beginning of the first integration sub-period (T1), and of setting the first and second switching times according to the observed variation of the voltage across the shared capacitive storage element (CS) during the setting phase.

16. The sensor of any of claims 12 to 14, wherein the setting of the first and second switching times is performed by taking into account a luminosity level measured during one or a plurality of previous acquisition phases.

Fig 1

Fig 2

Fig 3

Fig 4

Fig 5

Fig 6

Fig 7

Fig 8

Fig 9

Fig 10